# EUROPÄISCHE PATENTSCHRIFT

(11) **EP 2 748 218 B1**
(45) Veröffentlichungstag und Bekanntmachung des Hinweises auf die Patenterteilung: **08.03.2017**
(21) Anmeldenummer: 12748472.3
(22) Anmeldetag: 20.08.2012
(51) Int. Cl.: C08G 18/28, C08J 3/09, C08J 9/14

(54) **VERWENDUNG VON MIKROEMULSIONEN UND VERFAHREN ZUR HERSTELLUNG VON SCHAUMSTOFFEN**
USE OF MICROEMULSIONS AND PROCESS FOR FOAM MANUFACTURE
UTILISATION DE MICROÉMULSIONS ET PROCÉDÉ DE FABRICATION DE MOUSSES

(30) Priorität: 23.08.2011 EP 11178493
(43) Veröffentlichungstag der Anmeldung: 02.07.2014
(73) Patentinhaber: BASF SE, 67056 Ludwigshafen am Rhein (DE)
(72) Erfinder: FRICKE, Marc, 49090 Osnabrück (DE); SCHÜTTE, Markus, 49080 Osnabrück (DE); STAUDT, Thorsten, Martin, 68165 Mannheim (DE); HOLTZE, Christian, 68163 Mannheim (DE); KOCH, Sebastian, 49448 Lemförde (DE); BARTELS, Frank, 68161 Mannheim (DE)
(74) Vertreter: BASF IP Association
(86) Internationale Anmeldenummer: PCT/EP2012/066161
(87) Internationale Veröffentlichungsnummer: WO 2013/026813

(56) Entgegenhaltungen:
- WO-A1-2007/023334
- WO-A1-2007/094780
- WO-A2-2010/040834
- US-A1- 2003 020 042
- US-B1- 6 268 402

## Beschreibung

Gegenstand der Erfindung sind Mikroemulsionen, die insbesondere für die Herstellung von Polyurethan-Schaumstoffen eingesetzt werden können.

Polyurethan-Schaumstoffe und ihre Herstellung sind seit langem bekannt. Üblicherweise erfolgt die Herstellung durch Umsetzung von Polyisocyanaten und Verbindungen mit mindestens zwei mit Isocyanatgruppen reaktiven Wasserstoffatomen in Gegenwart von Treibmitteln.

Dabei ist es üblich, die Treibmittel vor der Umsetzung einer der Aufbaukomponenten zuzusetzen. Zumeist werden die Treibmittel den Verbindungen mit zwei mit Isocyanatgruppen reaktiven Wasserstoffatomen zugesetzt.

Als Treibmittel werden häufig sogenannte physikalische Treibmittel eingesetzt. Das sind üblicherweise gegenüber den Ausgangsverbindungen der Polyurethansynthese inerte Verbindungen, die bei Raumtemperatur flüssig sind und bei den Temperaturen bei der Urethanbildung verdampfen.

Als physikalische Treibmittel werden häufig unpolare Verbindungen, insbesondere Kohlenwasserstoffe, eingesetzt. Diese werden zumeist den Verbindungen mit mindestens zwei mit Isocyanatgruppen reaktiven Wasserstoffatomen zugemischt. Auf Grund des unpolaren Charakters der Kohlenwasserstoffe gibt es häufig Probleme mit der Löslichkeit dieser Verbindungen mit den Verbindungen mit mindestens zwei mit Isocyanatgruppen reaktiven Wasserstoffatomen, zumeist Polyolen.

Diese Probleme können beispielsweise mit Löslichkeitsvermittlern gelöst werden. Diese können sich jedoch negativ auf die Verarbeitung und die Eigenschaften der Schaumstoffe auswirken.

Weiterhin kann die Löslichkeit der Treibmittel in den Verbindungen mit mindestens zwei mit Isocyanatgruppen reaktiven Wasserstoffatomen durch die Auswahl spezieller Vertreter dieser Verbindungen verbessert werden. So kann sie beispielsweise durch die Verwendung von Polyetheralkoholen, die mit Aminen gestartet sind, verbessert werden. Derartige Polyole sind jedoch nicht für alle Anwendungsgebiete geeignet, außerdem ist die zusätzlich gelöste Menge an Treibmittel nur begrenzt.

Eine Möglichkeit, unpolare Verbindungen in die Polyolkomponente einzubringen, ist die Bildung von Emulsionen.

Emulsionen sind disperse Systeme von zwei oder mehreren miteinander nicht mischbaren Flüssigkeiten. Die eine der flüssigen Phasen bildet dabei das Dispersionsmedium (auch: äußere, kontinuierliche oder zusammenhängende Phase), in dem die andere Phase (auch: innere oder disperse Phase) in Form feiner Tröpfchen verteilt ist. In Abhängigkeit von der Größe der dispergierten Teilchen und von der kinetischen bzw. thermodynamischen Stabilität spricht man von Makro- (auch grob-dispers) und Mikroemulsion (auch kolloid-dispers). Der Teilchendurchmesser bzw. die Strukturgröße schwankt dabei zwischen 10⁻⁴ und 10⁻⁸ cm, d. h. im Nano- bis Mikrometerbereich, die meisten Emulsionen zeigen eine uneinheitliche Teilchengröße und sind polydispers. Je nach Größe der dispergierten Teilchen und Brechzahl-Unterschied zwischen kontinuierlicher Phase und disperser Phase sind Emulsionen milchig trüb (Makroemulsion) bis klar (Mikroemulsion).

Besonders geeignet sind Mikroemulsionen.

Aus dem Stand der Technik sind Emulsionen für den genannten Zweck bekannt.

DE 69213166 beschreibt den Einsatz von fluorierten inerten organischen Flüssigkeiten wie Perfluorobutyltetrahydrofuran in Kombination mit fluorhaltigen oberflächenaktiven Mitteln wie FC 430 der Firma 3M zur Herstellung von Emulsionen bzw. Mikroemulsionen, wobei ein Isocyanat-Prepolymer verwendet wird. Das Prepolymer wird durch Umsetzung von PMDI mit niedermolekularen Glykolen enthalten. Derartige halogenierte Verbindungen sind jedoch teuer und ökologisch bedenklich.

DE 4121161 beschreibt die Herstellung von Polyurethan-Hartschaumstoffen unter Verwendung von Vinylperfluoralkanen, wie Mischungen aus Vinylperfluor-n-butan und 1-H-Perfluorhexan, wobei die fluorierten Verbindungen in einer der beiden Komponenten wie z.B. im Polyol-Blend als Emulsion vorliegen. Dadurch werden Schaumstoffe mit feineren Zellen und niedrigerer Wärmeleitfähigkeit erhalten. Es werden milchige Emulsionen, jedoch keine Mikroemulsionen erhalten. Zu den Nachteilen gilt das oben Gesagte.

DE 19742011 beschreibt die Verwendung von speziellen Polyolen zur Herstellung halogenfreier Emulsionen, die als Polyol-Blends zur Herstellung von Hartschaumstoffen eingesetzt werden. Bei den Polyolen handelt es sich um Propylenoxid/Ethylenoxid-Blockcopolymere mit einem Ethylenoxid-Tip und einer OH-Zahl zwischen 10 und 100 mgKOH/g. Es handelt sich hierbei nicht um Mikroemulsionen.

DE 19742010 offenbart die Verwendung von speziellen Polyolen zur Herstellung halogenfreier Emulsionen, die als Polyol-Blends zur Herstellung von Hartschaumstoffen eingesetzt werden. Bei den Polyolen handelt es sich um Polyesteralkohole. Es werden keine Mikroemulsionen erhalten.

DE 69212342 beschreibt die Verwendung von fluorierten Alkanen zur Bildung von Mikroemulsionen für Polyolblends zur Herstellung von speziellen sehr feinzelligen und offenzelligen Hartschaumstoffen, die als Kernmaterial zur Herstellung von Vakuumisolationspaneelen eingesetzt werden. Feinzelligkeit wird durch Fluor-Additive und die Offenzelligkeit über cyclische Carbonate wie Glycerolcarbonat, Fixapret CNF erreicht. Als F-Additive kommen beispielsweise Perfluorpentan oder Perfluor-2-butyl-tetrahydrofuran zum Einsatz. Zu den Nachteilen der fluorierten Verbindungen gilt das oben Gesagte.

EP 0824123 beschreibt die Verwendung von tert-Butanol als Emulgator zur Herstellung phasenstabiler Polyol-Blends für die Herstellung von Hartschaumstoffen, z.B. für Kühlschrank-Anwendungen, die Cyclopentan als Treibmittel enthalten. Auch hierbei handelt es sich nicht um Mikroemulsionen.

US 4826623 beschreibt die Herstellung von Polyolblends für Polyurethan-Hartschaumstoffe, enthaltend Mikroemulsionen, um Unverträglichkeiten zwischen halogenierten Polyolen, die als Flammschutzmittel eingesetzt werden, und halogeniertem Treibmittel aufzuheben. Bei den verwendeten Emulgatoren handelt es sich beispielsweise um Mischungen aus Dimethylmethylphosphonat (MeP(O)(OMe)₂) und ethoxylierten Monoalkoholen oder auch klassischen Polyetherdiolen mit Propylenoxid-Rückgrat und Ethylenoxid-Endblock in der Kette. Hierbei handelt es sich nicht um Emulsionen von unpolaren Treibmitteln.

"Making polyurethane foams from microemulsions", C. Ligoure et al., Polymer 46 (2005) 6402-6410 beschreibt Polyisocyanurat (PIR)-Hartschäume, basierend auf Mikroemulsionen von n-Pentan in Polyolen. Ohne Tensid bzw. mit einem fluorierten Tensid wird keine stabile Emulsion erhalten; mit einem Silikon-Tensid (L6900, PDMS Polyether-Graft-Copolymer von Union Carbide) werden angeblich Mikroemulsionen erzielt, allerdings nur in einer kleinen Zwischenphase (intermediate Phase). Selbst mit 8,5 Gewichtsteilen Tensid ist die Formulierung phasensepariert in Treibmittel-, Polyol- und Zwischenphase. Derartige Systeme sind technisch nicht einsetzbar.

"Polyurethanes via Microemulsion Polymerization", J. Texter and P. Ziemer, Macromolecules 37 (2004), 5841-5843, beschreibt die Polymerisation von Polyurethanen, ausgehend von Mikroemulsionen nicht-mischbarer Monomere. Als Tensid wird bis(2-Ethylhexyl) sulfosuccinat-Natriumsalz (AOT) verwendet. Zum Schluss werden wasserbasierte Schäume erwähnt. Bei den dort erwähnten Produkten handelt es sich nicht um Polyurethan-Schaumstoffe.

WO 2007/0944780 A1 offenbart eine Harzmischung enthaltend ein Polyol und ein Kohlenwasserstoff-Treibmittel. Um die Löslichkeit und/oder Kompatibilität des Kohlenwasserstoff-Treibmittels in dem Polyol zu verbessern, wird ein Ethoxylat-Propoxylat-Tensid zugesetzt.

US 2003/0020042 A1 offenbart eine Polyesterpolyol-Zusammensetzung enthaltend Phthalsäureanhydrid-initiierte Polyesterpolyole, ein C4 bis C6 Kohlenwasserstoff-Treibmittel und einen Fettalkohol, der ethoxyliert ist als Tensid, um die Kompatibilität der Mischung zuverbessern.

US 6,268,402 B1 offenbart ein Verfahren zur Herstellung von Isocyanat-basierten Schäumen. Dazu wird ein organisches und/oder modifiziert organisches Polyisocyanat mit einer Polyolzusammensetzung und gegebenenfalls niedrigmolekularen Kettenverlängerern oder Quervernetzern in Gegenwart eines Katalysators umgesetzt. Diese Mischung kann auch eine ethoxylierte Fettsäure oder ein Fettsäurealkohol als Tensid enthalten.

Es war die Aufgabe der vorliegenden Erfindung, Komponenten für die Herstellung von Polyurethan-Schaumstoffen bereitzustellen, die mit unpolaren Verbindungen, beispielsweise unpolaren Treibmitteln, stabile Systeme bilden. Die unter Verwendung dieser Komponenten hergestellten Polyurethan-Schaumstoffe sollten eine gleichmäßige Zellstruktur, eine geringe Zellgröße und gute mechanische Eigenschaften aufweisen.

Die Aufgabe konnte überraschenderweise gelöst werden, indem die unpolaren Verbindungen und die Verbindungen mit mindestens zwei mit Isocyanatgruppen reaktiven Wasserstoffatomen in Form einer Mikroemulsion vorliegen.

Mikroemulsionen sind Wasser-Öl-Tensid-Gemische bzw. Gemische aus polaren Verbindungen, unpolaren Verbindungen und Tensiden, die im Gegensatz zu anderen Emulsionen thermodynamisch stabil sind. Sie sind optisch transparent und bilden sich ohne die für die Herstellung von Emulsionen sonst nötige hohe Energiezufuhr. Meist verwendet man zur Darstellung einer Mikroemulsion Cotenside. Gegebenenfalls können auch Cosolventien eingesetzt werden. Mikroemulsionen bilden sich nur in bestimmten Bereichen der Phasendiagramme der ternären oder auch quaternären Stoffsysteme.

Unter Mikroemulsionen werden somit Mischungen aus zwei miteinander nicht mischbaren Flüssigkeiten und mindestens einem nichtionischen oder einem ionischen Tensid, das einen oder mehrere hydrophobe(n) Rest(e), enthält, verstanden.

Gegenstand der Erfindung ist demzufolge die Verwendung einer Mikroemulsionen, enthaltend
a) mindestens eine Verbindung mit mindestens zwei mit Isocyanatgruppen reaktiven Wasserstoffatomen, ausgewählt aus der Gruppe, enthaltend Polyetheralkohole und Polyesteralkohole,
b) mindestens eine unpolare organische Verbindung, ausgewählt aus der Gruppe, enthaltend Alkane mit unverzweigter Kette und 3 bis 7 Kohlenstoffatomen im Molekül, Alkane mit verzweigter Kette und 3 bis 7 Kohlenstoffatomen im Molekül, Cycloalkane mit 3 bis 7 Kohlenstoffatomen im Molekül und Alkene mit 3 bis 7 Kohlenstoffen im Molekül,
c) mindestens eine halogenfreie Verbindung, die aus den Verbindungen a) und b) eine Mikroemulsion aufbaut, enthaltend ci) Sorbitanmonolaurat und mindestens eine von ci) verschiedene Verbindung cii) ausgewählt aus Verbindungen mit einem unpolaren Teil mit einer Kohlenstoff-Kettenlänge von 6 oder mehr und einer oder mehreren OH- oder NH-Gruppen als polaren Teil und Mischungen davon, wobei die unpolare Verbindung b) Fluor enthaltende Verbindungen enthält, zur Herstellung von Polyurethan-Schaumstoffen.

Die unpolare organische Verbindung b) ist ausgewählt aus der Gruppe, enthaltend Alkane mit unverzweigter Kette und 3 bis 7 Kohlenstoffatomen im Molekül, Alkane mit verzweigter Kette und 3 bis 7 Kohlenstoffatomen im Molekül, Cycloalkane mit 3 bis 7 Kohlenstoffatomen im Molekül.

Bevorzugte Verbindungen b) sind n-Pentan, iso-Pentan, Cyclopentan und beliebige Mischungen aus mindestens zwei der genannten Verbindungen. Besonders bevorzugt ist Cyclopentan.

Die unpolare organische Verbindung b) enthält Fluor enthaltende Verbindungen enthalten. Dabei handelt es sich bevorzugt um fluorierte und/oder perfluorierte lineare, verzweigte und/oder cycloaliphatische Verbindungen mit 3 bis 7 Kohlenstoffatomen im Molekül. Falls derartige Verbindungen verwendet werden, sollte ihre Menge 10 Gew.-%, bezogen auf das Gewicht der Komponente b), nicht übersteigen.

Die Komponente b) wird vorzugsweise in einer Menge von 5 bis 20 Gew.-%, bezogen auf das Gewicht der Mikroemulsion, eingesetzt.

Die Komponente a) ist ausgewählt aus der Gruppe, enthaltend Polyetheralkohole und Polyesteralkohole. Besonders bevorzugt ist die Komponente a) mindestens ein Polyetheralkohol.

In einer besonders bevorzugten Ausführungsform der Erfindung ist die Komponente a) mindestens ein Polyetheralkohol mit einer Funktionalität von 2 bis 8 und einem Molekulargewicht Mw von 400 bis 10 000.

Erfindungsgemäß enthält die Verbindung c) mindestens eine ci) Sorbitanmonolaurat und mindestens eine von ci) verschiedene Verbindung cii). Der Begriff amphiphil bezeichnet die chemische Eigenschaft einer Substanz, sowohl hydrophil als auch lipophil zu sein. Das heißt, sie kann sowohl mit polaren Lösungsmitteln als auch mit unpolaren Lösungsmitteln gut wechselwirken. Dies beruht darauf, dass die Moleküle polare als auch unpolare Bereiche aufweisen.

Die Verbindung der polaren und unpolaren Gruppe im Molekül kann eine Ether-, Ester-, Bindung sein.

Bevorzugt sollten diese Verbindungen einen niedrigen HLB-Wert haben, insbesondere kleiner als 10, das heißt wenig Alkoxylat im Vergleich zu der Zahl der Kohlenstoffatome. Ein bevorzugtes Beispiel ist 2 Ethylenoxideinheiten auf 18 Kohlenstoffatome oder besonders bevorzugt Fettalkohole mit 0 Ethylenoxideinheiten. Die Zahl der Kohlenstoffatome in der polaren Gruppe ist bevorzugt kleiner als die Zahl der Kohlenstoffatome in der unpolaren Gruppe.

Erfindungsgemäß vorteilhaft sind auch entsprechende Verbindungen mit einer niedrigen kritischen Mizellbildungskonzentration (cmc). Weiter vorteilhaft sind auch entsprechende Verbindungen mit einer niedrigen kritischen Aggregationskonzentration (cac).

Die Komponente cii) ist erfindungsgemäß eine von ci) verschiedene Verbindung ausgewählt aus Verbindungen mit einem unpolaren Teil mit einer Kohlenstoff-Kettenlänge von 6 oder mehr und einer oder mehreren OH- oder NH-Gruppen als polaren Teil und Mischungen davon. Erfindungsgemäß bevorzugt weist der unpolare Teil einer als Verbindung cii) geeigneten Verbindung höchstens 18 Kohlenstoffatome, bevorzugt höchstens 16 Kohlenstoffatome, auf. Ein Beispiel hierfür sind n-Alkohole. Die Komponente cii) kann jedoch auch ein methylverkapptes Alkoxylat sein, oder polare Gruppen wie für ci) genannt enthalten.

Das Gewichtsverhältnis der Komponente ci zu cii beträgt beispielsweise 0,1 bis 10, bevorzugt 0,5 bis 5, besonders bevorzugt 0,8 bis 2.

In einer Ausführungsform der Erfindung ist die Komponente cii) eine hydrophobe Verbindung.

Bevorzugt werden nichtionische Verbindungen als Komponente cii) eingesetzt.

Neben den Komponenten ci) und cii) kann erfindungsgemäß auch zusätzlich wenigstens ein weiteres Tensid in der erfindungsgemäßen Mikroemulsion eingesetzt werden. Erfindungsgemäß können dazu im Allgemeinen dem Fachmann bekannte Tenside, beispielsweise ausgewählt aus amphiphilen Molekülen bestehend insbesondere aus einer oder mehreren unpolaren Gruppen, die Kohlenstoffketten von mehr als 8 C-Atomen enthalten, eingesetzt werden. Beispiele hierfür sind Lauryl-, Oleyl-, Stearylreste. Dabei kann es sich um kommerzielle Tenside handeln. Diese Verbindungen haben üblicherweise weniger als 30 Kohlenstoffatome. Beispiele sind Polyisobutylen, Poly(ethylen-co-butylen), gegebenenfalls auch Silicongruppen, mit der Maßgabe, dass in der Formulierung keine Kristallisation der hydrophoben Gruppen auftritt, und dass die polaren Gruppen mit der Polyolkomponente verträglich sind. Beispiele hierfür sind Alkoxylate mit Polyethylenglykol oder Polypropylenglykol und/oder mit Zuckern oder Mischungen daraus. Es können auch Fettamin-Alkoxylate oder Fettsäureamid-Alkoxylate eingesetzt werden.

Vorzugsweise wird die Komponente c) in einer Menge von größer als 0 bis kleiner als 20 Gew.-% bevorzugt von größer als 0 bis 16 Gew.-%, besonders bevorzugt von größer als 0 bis 10 Gew.-%, jeweils bezogen auf das Gewicht der Summe der Komponenten a), b) und c). Die genaue Einsatzmenge ist abhängig von der Formulierung.

Vorzugsweise sind die Mikroemulsionen optisch klar. Dies bedeutet, dass sie eine Transmission von 90% bei 1 cm Küvettendicke und einer Lichtwellenlänge 700 nm aufweisen.

Die Mikroemulsionen weisen vorzugsweise ein charakteristisches, durchgehend abfallendes, sigmoidales Signal und unter Annahme eines globulären Models Strukturen, d. h. gequollene Mizellen, mit einem Radius zwischen 2 und 40 nm, bevorzugt zwischen 5 und 40 nm, besonders bevorzugt zwischen 10 und 40 nm und insbesondere zwischen 20 und 30 nm in der Kleinwinkel-Röntgenstreuung (SAXS) auf.

Des Weiteren können die erfindungsgemäßen Mikroemulsionen auch unterschiedliche interne Strukturen aufweisen. Im Gegensatz zu Mikroemulsionen, in denen gequollene Mizellen, d. h. globuläre Strukturen, vorliegen, durchdringen sich bei erfindungsgemäß in einer Ausführungsform vorliegenden bikontinuierlichen Mikroemulsionen die beiden Phasen viel stärker. Erfindungsgemäße bikontinuierliche Microemulsionen zeigen in SAXS-Messungen einen charakterisitischen Peak im nm-Bereich, beispielsweise typischerweise 40 bis 100 nm, und können so von mizellaren Mikroemulsionen unterschieden werden.

Die erfindungsgemäß verwendete Mikroemulsion liegt bevorzugt bikontinuierlich vor d. h. dass diese erfindungsgemäß verwendete Microemulsionen in SAXS-Messungen einen charakterisitischen Peak im nm-Bereich, beispielsweise typischerweise 40 bis 100 nm, aufweisen.

Die SAXS Messungen wurden am SAXSess (Anton Paar GmbH, Graz, Österreich) in Spaltkollimation durchgeführt. Als Röntgenstrahlungsquelle wurde die Cu K_{α}-Linie verwendet (40 kV, 40 mA) und mit Göbelspiegeln monochromatisiert. Zur Detektion wurde eine Imaging-Plate (Flächendetektor) eingesetzt, die die gestreute Röntgenstrahlung akkumuliert. Die Messtemperatur betrug 20°C, die Messzeit 2 Minuten, der Abstand Probe zu Detektor 261,2 mm. Die Probe wurde in einer Kapillare präpariert. Mit Hilfe der SAXSess Software wurden die Messdaten entschmiert.

Das SAXsess misst die von einer Probe gestreute Strahlung. Die Probe wird mit genau definierter Röntgenstrahlung bestrahlt. Der Winkel, unter dem die Strahlung detektiert wird, kann zwischen 0,05° und 5° eingestellt werden. Dieser Bereich enthält Informationen über Strukturen im Nanometer Bereich.

Die Herstellung der erfindungsgemäß verwendeten Mikroemulsionen kann auf unterschiedliche Weise erfolgen.

In einer Ausführungsform der Erfindung werden alle Bestandteile der Mikroemulsion zusammengeführt und durch Mischen die Mikroemulsion erzeugt.

In einer weiteren bevorzugten Ausführungsform der wird zunächst Komponente a) mit der Komponente b) vermischt und zu dieser Mischung die Komponente c) gemischt, wodurch sich die Mikroemulsion ausbildet.

In einer weiteren, bevorzugten Ausführungsform der Erfindung wird zunächst Komponente a) mit der Komponente c) vermischt. Diese Mischung ist stabil und kann lange gelagert werden. Zu dieser Mischung wird später die Komponente b) gemischt, wodurch sich die Mikroemulsion ausbildet.

Die Vermischung erfolgt in allen Fällen vorzugsweise durch mechanisches Rühren. Dabei kann es vorteilhaft sein, die Mischung aufzuheizen.

In einer weiteren bevorzugten Ausführungsform der Erfindung wird zunächst eine Teilmenge der Komponente a) mit den Komponenten b) und c) vermischt. Dies führt zur Ausbildung einer höher konzentrierten Mikroemulsion. Dieses Konzentrat kann durch Zugabe der für die weitere Verarbeitung erforderlichen Menge der Komponente a) dem jeweiligen Verwendungszweck angepasst werden. Diese Variante kann die Logistik bei der Bereitstellung von Polyurethansystemen verbessern. Möglich ist diese Verfahrensvariante durch die hervorragende Lagerstabilität der erfindungsgemäß verwendeten Mikroemulsionen und die Möglichkeit, auch größere Mengen der Komponente b) in die Mikroemulsionen einzuarbeiten, ohne dass es zu Problemen bei der Lagerstabilität kommt. Die Zugabe der Restmenge der Komponente a) kann bereits während der Lagerung der Mikroemulsion erfolgen. In einer bevorzugten Ausführungsform der Erfindung kann die Zugabe der Restmenge der Komponente a) auch erst unmittelbar vor der Herstellung der Schäume, beispielsweise im Mischkopf, in dem die Polyolkomponente und die Isocyanatkomponente gemischt werden, erfolgen.

Die Verbindungen mit mindestens zwei gegenüber Isocyanatgruppen reaktiven Wasserstoffatomen (Komponente a) sind ausgewählt aus der Gruppe, enthaltend Polyetheralkohole und Polyesteralkohole.

Die in der Komponente a) eingesetzten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt. In einer bevorzugten Ausführungsform der Erfindung sind die Carbonsäuren aromatische Carbonsäuren, wobei Phthalsäure, Terephthalsäure und Mischungen daraus eingesetzt werden. Die Phthalsäure wird bei der Synthese der Polyesteralkohole vorzugsweise in Form des Anhydrids eingesetzt.

Die Polyesteralkohole haben bevorzugt eine Hydroxylzahl im Bereich zwischen 50 und 300 mgKOH/g und eine Funktionalität im Bereich zwischen 2 und 4.

Vorzugsweise werden als Komponente a) Polyetheralkohole eingesetzt.

Die als Komponente a) eingesetzten Polyetheralkohole haben zumeist eine Funktionalität zwischen 2 und 8, insbesondere 3 bis 8.

Insbesondere kommen Polyetheralkohole, die nach bekannten Verfahren, beispielsweise durch anionische Polymerisation von Alkylenoxiden in Gegenwart von Katalysatoren, vorzugsweise Alkalihydroxiden, hergestellt werden, zum Einsatz.

Als Alkylenoxide werden zumeist Ethylenoxid und/oder Propylenoxid eingesetzt.

Als Startmoleküle kommen insbesondere Verbindungen mit mindestens 2, vorzugsweise mindestens 3, und bei der weiteren Verwendung zur Herstellung von Polyurethan-Hartschaumstoffen 4 bis 8 Hydroxylgruppen oder mindestens einer, vorzugsweise mindestens zwei primären oder sekundären, insbesondere primären Aminogruppen zum Einsatz.

Als Startmoleküle mit mindestens 3, vorzugsweise 4 bis 8 Hydroxylgruppen, im Molekül werden vorzugsweise Trimethylolpropan, Glycerin, Pentaerythrit, Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin eingesetzt.

Als Startmoleküle mit mindestens zwei primären Aminogruppen im Molekül werden vorzugsweise aromatische Di- und/oder Polyamine, beispielsweise Phenylendiamine, 2,3-, 2,4-, 3,4- und 2,6-Toluylendiamin und 4,4'-, 2,4'- und 2,2'-Diamino-diphenylmethan, insbesondere im Gemisch mit ihren höheren Homologen sowie aliphatische Di- und Polyamine, wie Ethylendiamin, eingesetzt. Bevorzugt sind Diphenylmethan und seine höheren Homologen und Toluylendiamin, und hier insbesondere die 2,3- und 3,4-Isomeren. Als aliphatisches Amin ist Ethylendiamin bevorzugt.

Die Polyetherpolyole besitzen eine Funktionalität von vorzugsweise 3 bis 8 und Hydroxylzahlen von vorzugsweise 100 mgKOH/g bis 1200 mgKOH/g und insbesondere 240 mgKOH/g bis 570 mgKOH/g.

Die genannten Polyole können allein oder als Gemisch eingesetzt werden.

In einer bevorzugten Ausführungsform der Erfindung wird als Komponente a) ein Gemisch aus mindestens zwei Polyolen, insbesondere mindestens zwei Polyetheralkoholen, eingesetzt.

In einer besonders bevorzugten Ausführungsform der Erfindung ist die Komponente a) eine Mischung aus einem hochfunktionellen Polyetheralkohol ai) und einem mit einem Amin gestarteten Polyetheralkohol aii).

Polyol ai) ist vorzugsweise ein mit einem Zucker, gegebenenfalls im Gemisch mit einem mehrfunktionellen Alkohol, gestarteter Polyetheralkohol. Der Zucker ist vorzugsweise Saccharose und/oder Sorbit. Der mehrfunktionelle Alkohol ist ein Glykol, beispielsweise Ethylenglykol oder Propylenglykol, oder Glyzerin. Bevorzugst wird Glyzerin eingesetzt. Die Komponente ai) hat bevorzugt eine Funktionalität von 4 bis 8 und eine Hydroxylzahl von 300 bis 600 mgKOH/g.

Polyol aii) ist vorzugsweise ein mit einem Amin, insbesondere mit einem aromatischen Amin gestarteter Polyetheralkohol. Als Starter kommen insbesondere die oben genannten aromatischen Amine zum Einsatz. Bevorzugt eingesetzt wird Toluylendiamin (TDA), wobei die 2,3- und 3,4-Isomere, auch als vicinales TDA bezeichnet, eingesetzt werden. Das Polyol aii) hat vorzugsweise eine Funktionalität von 3 bis 6 und eine Hydroxylzahl im Bereich zwischen 300 und 600 mg KOH/g.

In einer weiteren bevorzugten Ausführungsform der Erfindung enthalten die Mikroemulsionen zusätzlich Wasser. Dieses wird bevorzugt in einer Menge von 0,5 bis 5 Gew.-%, bezogen auf das Gewicht der Mikroemulsionen, eingesetzt.

Auch das Wasser kann dabei mikroemulgiert vorliegen. Dazu werden sich die polaren Gruppen der amphiphilen Moleküle hin zu den Wassermolekülen ausrichten. Wasser ist dann in mizellaren oder bikontinuierlichen Strukturen aufgenommen. Die Treibmittelverträglichkeit, das heißt eine klare, stabile Formulierung des Polyols, wird durch diese Mikroemulsion ebenfalls verbessert.

Wie bereits ausgeführt, werden die erfindungsgemäßen Mikroemulsionen vorzugsweise zur Herstellung von Polyurethan-Schaumstoffen, insbesondere zur Herstellung von Polyurethan-Hartschaumstoffen, eingesetzt.

Dazu werden die Mikroemulsionen mit Polyisocyanaten umgesetzt.

Die vorliegende Erfindung betrifft daher auch ein Verfahren zur Herstellung von Polyurethan-Schaumstoffen durch Umsetzung von
d) Polyisocyanaten mit
a) Verbindungen mit mindestens zwei mit Isocyanatgruppen reaktiven Wasserstoffatomen ausgewählt aus der Gruppe, enthaltend Polyetheralkohole und Polyestheralkohole in Gegenwart von
b) Treibmitteln und c) mindestens eine halogenfreie Verbindung, die aus den Verbindungen a) und b) eine Mikroemulsion aufbaut, enthaltend Sorbitanmonolaurat und mindestens eine von ci) verschiedene Verbindung cii) ausgewählt aus Verbindungen mit einem unpolaren Teil mit einer Kohlenstoff-Kettenlänge von 6 oder mehr und einer oder mehreren OH- oder NH-Gruppen als polaren Teil und Mischungen davon,
wobei die Komponenten a) und b) in Form einer erfindungsgemäßen Mikroemulsion eingesetzt werden.

Als Polyisocyanate kommen vorzugsweise aromatische mehrwertige Isocyanate in Betracht.

Im einzelnen seien beispielhaft genannt 2,4- und 2,6-Toluylendiisocyanat (TDI) und die entsprechenden Isomerengemische, 4,4'-, 2,4'- und 2,2'-Diphenylmethan-diisocyanat (MDI) und die entsprechenden Isomerengemische, Mischungen aus 4,4'- und 2,4'-Diphenylmethandiisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylendiisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Isocyanurat- und/oder Urethangruppen enthaltende Di- und/oder Polyisocyanate. Die modifizierten Polyisocyanate können gegebenenfalls miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gemischt werden.

Daneben können auch Umsetzungsprodukte von mehrwertigen Isocyanaten mit mehrwertigen Polyolen, sowie deren Mischungen mit anderen Di- und Polyisocyanaten Verwendung finden.

Besonders bewährt hat sich als organisches Polyisocyanat Roh-MDI mit einem NCO-Gehalt von 29 bis 33 Gew.-% und einer Viskosität bei 25°C im Bereich von 150 bis 1000 mPa·s.

Die Herstellung der Schaumstoffe erfolgt üblicherweise in Anwesenheit von Katalysatoren sowie, falls erforderlich weiteren, Hilfs- und/oder Zusatzstoffen.

Als Katalysatoren werden insbesondere Verbindungen eingesetzt, welche die Reaktion der Isocyanatgruppen mit den mit Isocyanatgruppen reaktiven Gruppen stark beschleunigen.

Solche Katalysatoren sind stark basische Amine, wie z. B. sekundäre aliphatische Amine, Imidazole, Amidine, sowie Alkanolamine.

Falls in den Hartschaumstoff Isocyanuratgruppen eingebaut werden sollen, werden spezielle Katalysatoren benötigt. Als Isocyanurat-Katalysatoren werden üblicherweise Metallcarboxylate, insbesondere Kaliumacetat und dessen Lösungen, eingesetzt.

Die Katalysatoren können, je nach Erfordernis, allein oder in beliebigen Mischungen untereinander eingesetzt werden.

Als Hilfsmittel und/oder Zusatzstoffe b4) kommen die für diesen Zweck an sich bekannten Stoffe, beispielsweise oberflächenaktive Substanzen, Schaumstabilisatoren, Zellregler, Füllstoffe, Pigmente, Farbstoffe, Flammschutzmittel, Hydrolyseschutzmittel, Antistatika, fungistatisch und bakteriostatisch wirkende Mittel zum Einsatz.

Diese können vor oder nach der Herstellung der Polyurethane den Mikroemulsionen zugemischt oder auch separat dosiert werden.

Zur Herstellung der Polyurethan-Hartschaumstoffe werden die Polyisocyanate und die Mikroemulsion in solchen Mengen zur Umsetzung gebracht, dass der Isocyanatindex in einem Bereich zwischen 125 und 220, vorzugsweise zwischen 145 und 195, liegt.

Die vorliegende Erfindung betrifft auch entsprechende Polyurethan-Schaumstoffe, herstellbar nach dem erfindungsgemäßen Verfahren.

Die erfindungsgemäß verwendeten Mikroemulsionen zeichnen sich durch eine sehr gute Lagerstabilität aus. So ist es möglich, auf bisher eingesetzte zusätzliche Hilfsmittel zur Stabilisierung der Treibmittel enthaltenden Polyolkomponente zu verzichten, beispielsweise langkettige Polyole.

Die Erfindung soll an den nachfolgenden Beispielen näher beschrieben werden.

### Herstellung der Polyolmischungen

### Eingesetzte Rohstoffe:

Polyol A: Polyetheralkohol aus Saccharose, Glycerin und Propylenoxid, Funktionalität 5,1, Hydroxylzahl 450, Viskosität 18500 mPa·s bei 25°C
Polyol B: Polyetheralkohol aus vicinalem TDA, Ethylenoxid und Propylenoxid, Gehalt an Ethylenoxid: 15%, Funktionalität 3,8, Hydroxylzahl 390, Viskosität 13000 mPa·s bei 25°C
Polyol C: Polyetheralkohol aus vicinalem TDA, Ethylenoxid und Propylenoxid, Gehalt an Ethylenoxid: 15%, Funktionalität 3,9, Hydroxylzahl 160, Viskosität 650 mPa·s bei 25°C

| | |
|---|---|
| Stabilisator: | Tegostab® B 8491 (Schaumstabilisator basierend auf Polyether-polysiloxanen von Evonik) |
| Katalysator 1: | Dimethylcyclohexylamin (DMCHA) |
| Katalysator 2: | Pentamethyldiethylentriamin (PMDETA) |
| Katalysator 3: | N,N',N'Tris-Dimethylamino-propylhexahydrotriazin |
| | |
| S-Maz 20: | Sorbitanmonolaurat (BASF) |

Aus den angegebenen Rohstoffen wurden Polyolkomponenten wie in Tabelle 1,2 und 3 angegeben hergestellt. Nach 24 h wurde die Phasenstabilität überprüft.

**Tabelle 1**

| | 1 | 2 (erfindungsgemäß) |
|---|---|---|
| Polyol-Komponente [pbw] | | |
| Polyol A | 60 | 60 |
| Polyol B | 23 | 23 |
| Polyol C | 10 | - |
| S-Maz 20 | - | 5 |
| n-Decanol | - | 5 |
| Wasser | 2,55 | 2,55 |
| Stabilisator | 2,75 | 2,75 |
| Katalysator | 1,7 | 1,7 |
| Cyclopentan | 15 | 15 |
| Phasenstabilität bei 6°C nach 24 h | trüb | homogen |

**Tabelle 2**

| | 3 | 4 (erfindungsgemäß) |
|---|---|---|
| Polyol-Komponente [pbw] | | |
| Polyol A | 53 | 53 |
| Polyol B | 36 | 36 |
| Polyol C | 4 | - |
| S-Maz 20 | - | 2 |
| n-Decanol | - | 2 |
| Wasser | 2,55 | 2,55 |
| Stabilisator | 2,75 | 2,75 |
| Katalysator | 1,7 | 1,7 |
| Cyclopentan | 15 | 15 |
| Phasenstabilität bei 6°C nach 24 h | trüb | homogen |

**Tabelle 3**

| | 5 | 6 (erfindungsgemäß) |
|---|---|---|
| Polyol-Komponente [pbw] | | |
| Polyol A | 57 | 57 |
| Polyol B | 30 | 30 |
| Polyol C | 6 | - |
| S-Maz 20 | - | 3 |
| n-Decanol | - | 3 |
| Wasser | 2,55 | 2,55 |
| Stabilisator | 2,75 | 2,75 |
| Katalysator | 1,7 | 1,7 |
| Cyclopentan | 15 | 15 |
| Phasenstabilität bei 23°C nach 24 h | trüb | homogen |

Die Beispiele 1, 3 und 5 stellen Vergleichsbeispiele dar und sind nach 24h trüb. Die Systeme in den Beispielen 2, 4 und 6 (erfindungsgemäß) mit einer Tensidmischung bestehend aus gleichen Anteilen S-Maz 20 und n-Decanol sind nach 24h einphasig und klar, was auf eine phasenstabile Komponente hindeutet.

## Patentansprüche

1. Verwendung einer Mikroemulsion, enthaltend
a) mindestens eine Verbindung mit mindestens zwei mit Isocyanatgruppen reaktiven Wasserstoffatomen, ausgewählt aus der Gruppe, enthaltend Polyetheralkohole und Polyesteralkohole,
b) mindestens eine unpolare organische Verbindung, ausgewählt aus der Gruppe, enthaltend Alkane mit unverzweigter Kette und 3 bis 7 Kohlenstoffatomen im Molekül, Alkane mit verzweigter Kette und 3 bis 7 Kohlenstoffatomen im Molekül, Cycloalkane mit 3 bis 7 Kohlenstoffatomen im Molekül und Alkene mit 3 bis 7 Kohlenstoffen im Molekül,
c) mindestens eine halogenfreie Verbindung, die aus den Verbindungen a) und b) eine Mikroemulsion aufbaut, enthaltend ci) Sorbitanmonolaurat und mindestens eine von ci) verschiedene Verbindung cii) ausgewählt aus Verbindungen mit einem unpolaren Teil mit einer Kohlenstoff-Kettenlänge von 6 oder mehr und einer oder mehreren OH- oder NH-Gruppen als polaren Teil und Mischungen davon,
wobei die unpolare organische Verbindung b) Fluor enthaltende Verbindungen enthält, zur Herstellung von Polyurethan-Schaumstoffen.

2. Verwendung nach Anspruch 1, **dadurch gekennzeichnet, dass** die Verbindung a) ein Polyetheralkohol ist.

3. Verwendung nach Anspruch 1 oder 2, **dadurch gekennzeichnet, dass** die Verbindung a) ein Polyetheralkohol mit einer Funktionalität von 2 bis 8 und einem Molekulargewicht Mw von 400 bis 10 000 ist.

4. Verwendung nach einem der Ansprüche 1 bis 3, **dadurch gekennzeichnet, dass** die Verbindung cii) eine nichtionische Verbindung ist.

5. Verwendung nach einem der Ansprüche 1 bis 4, **dadurch gekennzeichnet, dass** die Mikroemulsionen optisch klar sind.

6. Verwendung nach einem der Ansprüche 1 bis 5, **dadurch gekennzeichnet, dass** sie ein charakteristisches, durchgehend abfallendes, sigmoidales Signal und unter Annahme eines globulären Models Strukturen zwischen 2 und 40 nm, in der Kleinwinkel-Röntgenstreuung (SAXS) aufweisen.

7. Verwendung nach einem der Ansprüche 1 bis 6, **dadurch gekennzeichnet, dass** die Komponenten c) in einer Menge von größer als 0 bis kleiner als 20 Gew.-%, bezogen auf das Gewicht der Summe der Komponenten a), b) und c), vorliegt.

8. Verfahren zur Herstellung von Polyurethan-Schaumstoffen durch Umsetzung von
d) Polyisocyanaten mit
a) Verbindungen mit mindestens zwei mit Isocyanatgruppen reaktiven Wasserstoffatomen, ausgewählt aus der Gruppe, enthaltend Polyetheralkohole und Polyesteralkohole, in Gegenwart von
b) Treibmitteln, und
c) mindestens eine halogenfreie Verbindung, die aus den Verbindungen a) und b) eine Mikroemulsion aufbaut, enthaltend ci) Sorbitanmonolaurat und mindestens eine von ci) verschiedene Verbindung cii) ausgewählt aus Verbindungen mit einem unpolaren Teil mit einer Kohlenstoff-Kettenlänge von 6 oder mehr und einer oder mehreren OH- oder NH-Gruppen als polaren Teil und Mischungen davon,
**dadurch gekennzeichnet, dass** die Komponenten a) und b) in Form einer Mikroemulsion wie in Anspruch 1 bis 7 definiert eingesetzt werden.

9. Polyurethan-Schaumstoffe, herstellbar nach Anspruch 8.

## Claims

1. The use of a microemulsion comprising
a) at least one compound having two or more isocyanate-reactive hydrogen atoms, selected from the group comprising polyether alcohols and polyester alcohols
b) at least one apolar organic compound, selected from the group comprising alkanes having an unbranched chain and 3 to 7 carbon atoms in the molecule, alkanes having a branched chain and 3 to 7 carbon atoms in the molecule, cycloalkanes having 3 to 7 carbon atoms in the molecule and alkenes having 3 to 7 carbons in the molecule
c) at least one halogen-free compound effective in causing said compounds a) and b) to build a microemulsion, comprising ci) sorbitan monolaurate and at least one compound cii), other than ci), selected from compounds having an apolar portion having a carbon chain length of 6 or more and one or more OH or NH groups as polar portion and mixtures thereof,
wherein the apolar organic compound b) comprises compounds comprising fluorine, for the production of polyurethane foams.

2. The use according to claim 1 wherein said compound a) is a polyether alcohol.

3. The use according to claim 1 or 2 wherein said compound a) is a polyether alcohol having a functionality of 2 to 8 and a molecular weight Mw of 400 to 10 000.

4. The use according to any one of claims 1 to 3 wherein said compound cii) is a nonionic compound.

5. The use according to any one of claims 1 to 4 wherein the microemulsions are optically clear.

6. The use according to any one of claims 1 to 5 wherein, in small angle x-ray scattering (SAXS), they have a characteristic, monotonously descending, sigmoidal signal and structures between 2 and 40 nm assuming a globular model.

7. The use according to any one of claims 1 to 6 wherein the components c) is present in an amount of above 0% to below 20% by weight, based on the weight of the sum of components a), b) and c).

8. A process for production of polyurethane foams by reaction of
d) polyisocyanates with
a) compounds having two or more isocyanate-reactive hydrogen atoms, selected from the group comprising polyether alcohols and polyester alcohols, in the presence of
b) blowing agents, and
at least one halogen-free compound effective in causing said compounds a) and b) to build a microemulsion, comprising ci) sorbitan monolaurate and at least one compound cii), other than ci), selected from compounds having an apolar portion having a carbon chain length of 6 or more and one or more OH or NH groups as polar portion and mixtures thereof,
which process comprises utilizing said components a) and b) in the form of a microemulsion as defined in claim 1 to 7.

9. A polyurethane foam obtainable according to claim 8.

## Revendications

1. Utilisation d'une microémulsion, contenant
a) au moins un composé contenant au moins deux atomes d'hydrogène réactifs avec les groupes isocyanates, choisi dans le groupe contenant les polyéther-alcools et les polyester-alcools,
b) au moins un composé organique apolaire, choisi dans le groupe contenant les alcanes comprenant une chaîne non ramifiée et 3 à 7 atomes de carbone par molécule, les alcanes comprenant une chaîne ramifiée et 3 à 7 atomes de carbone par molécule, les cycloalcanes comprenant 3 à 7 atomes de carbone par molécule et les alcènes comprenant 3 à 7 carbones par molécule,
c) au moins un composé sans halogène, qui forme une microémulsion à partir des composés a) et b), contenant ci) du monolaurate de sorbitane et au moins un composé cii) différent de ci), choisi parmi les composés comprenant une partie apolaire ayant une longueur de chaîne carbonée de 6 ou plus et un ou plusieurs groupes OH ou NH en tant que partie polaire, et leurs mélanges, le composé organique apolaire b) contenant des composés contenant du fluor, pour la fabrication de mousses de polyuréthane.

2. Utilisation selon la revendication 1, **caractérisée en ce que** le composé a) est un polyéther-alcool.

3. Utilisation selon la revendication 1 ou 2, **caractérisée en ce que** le composé a) est un polyéther-alcool ayant une fonctionnalité de 2 à 8 et un poids moléculaire Mw de 400 à 10 000.

4. Utilisation selon l'une quelconque des revendications 1 à 3, **caractérisée en ce que** le composé cii) est un composé non ionique.

5. Utilisation selon l'une quelconque des revendications 1 à 4, **caractérisée en ce que** les microémulsions sont optiquement limpides.

6. Utilisation selon l'une quelconque des revendications 1 à 5, **caractérisée en ce qu'**elles présentent un signal sigmoïdal continuellement décroissant caractéristique et, en supposant un modèle globulaire, des structures comprises entre 2 et 40 nm, dans la diffusion des rayons X aux petits angles (SAXS).

7. Utilisation selon l'une quelconque des revendications 1 à 6, **caractérisée en ce que** les composants c) est présent en une quantité de plus de 0 à moins de 20 % en poids, par rapport au poids de la somme des composants a), b) et c).

8. Procédé de fabrication de mousses de polyuréthane, par mise en réaction de
d) des polyisocyanates avec
a) des composés contenant au moins deux atomes d'hydrogène réactifs avec les groupes isocyanate, choisis dans le groupe contenant les polyéther-alcools et les polyester-alcools, en présence de
b) des agents gonflants et
c) au moins un composé sans halogène, qui forme une microémulsion à partir des composés a) et b), contenant ci) du monolaurate de sorbitane et au moins un composé cii) différent de ci), choisi parmi les composés comprenant une partie apolaire ayant une longueur de chaîne carbonée de 6 ou plus et un ou plusieurs groupes OH ou NH en tant que partie polaire, et leurs mélanges, **caractérisé en ce que** les composants a) et b) sont utilisés sous la forme d'une microémulsion telle que définie dans la revendication 1 à 7.

9. Mousses de polyuréthane, pouvant être fabriquées selon la revendication 8.
